# EUROPÄISCHE PATENTSCHRIFT

(11) **EP 3 772 525 B1**
(45) Veröffentlichungstag und Bekanntmachung des Hinweises auf die Patenterteilung: **22.11.2023**
(21) Anmeldenummer: 19191079.3
(22) Anmeldetag: 09.08.2019
(51) Int. Cl.: C08K 5/372, C08L 53/02, C08L 95/00

(54) **POLYMERMODIFIZIERTES BITUMEN, VERFAHREN ZUR HERSTELLUNG UND DESSEN VERWENDUNG FÜR ASPHALT**
RUBBER-MODIFIED BITUMEN, METHOD FOR ITS PREPARATION AND ITS USE IN ASPHALT.
BITUME MODIFIÉ PAR DU CAOUTCHOUC, PROCÉDÉ POUR SON FABRICATION ET SON UTILISATION DANS L'ASPHALTE

(43) Veröffentlichungstag der Anmeldung: 10.02.2021
(73) Patentinhaber: LANXESS Deutschland GmbH, 50569 Köln (DE)
(72) Erfinder: KLEIN, Thomas, 69126 Heidelberg (DE); ROSSRUCKER, Thomas, 76684 Östringen (DE); HORSTMANN, Sandra, 67141 Neuhofen (DE)

(56) Entgegenhaltungen:
- US-A- 4 554 313

## Beschreibung

Die vorliegende Erfindung betrifft polymermodifiziertes Bitumen, Verfahren zur Herstellung und dessen Verwendung für Asphalt.

### Stand der Technik

Polymere als Additiv zur Modifizierung von Bitumen haben in den letzten Jahrzehnten besondere Aufmerksamkeit gefunden. Polymere, wie z.B. Copolymere vom Typ Styrol-Butadien (SBR) oder Styrol-Butadien-Styrol ("SBS"), verbessern die Konstanz der viskoelastischen Eigenschaften des so modifizierten Bitumens mit der Temperatur. Insbesondere soll die Stabilität der das modifizierte Bitumen enthaltenen Asphaltdecke gegenüber Deformation durch Schwerlastverkehr während der Sommermonate erhöht werden.

Bekanntermaßen können Stabilität und technische Leistungsfähigkeit (insbesondere von Polymer-modifiziertem Bitumen ("PmB") durch die Vernetzung von beispielsweise SBR- oder auch SBS-Copolymeren durch Schwefel weiter gesteigert werden (US-A 4554313). Alternativ zu elementarem Schwefel wurden Alkylpolysulfiden des Typs R-S₍ₓ₎-R (R= Alkylkette, S₍ₓ₎= x Schwefelatome direkt miteinander verkettet) eingesetzt. Der Vorteil gegenüber der Verwendung von elementarem Schwefel besteht in einer höheren Homogenität der Verteilung des reaktiven Schwefels in der Bitumen-Polymer-Mischung mit entsprechendem Vorteil bei der Vernetzung des Polymers (US-A 4554313). Außerdem reduziert die Verwendung von Alkyl-Polysulfiden die Emission von Schwefelwasserstoff, der in einer Nebenreaktion bei der Vernetzung freigesetzt wird (US-A 7608650).

In US-A 4554313 wird eine Vielzahl von Dialkyl-Polysulfiden der Formel R-S₍ₓ₎-R mit R = C₆ bis C₁₆ und x = 2 bis 5 für die Anwendung in Bitumen offenbart. Favorisiert werden Di-tert-dodecyl-Pentasulfid und Dinonyl-Pentasulfid. Diese haben allerdings den Nachteil, dass sie die Belastungsverhältnisse auf der Strasse weniger gut aushalten.

### Aufgabe der vorliegenden Erfindung

Ausgehend vom oben beschriebenen Stand der Technik bestand die Aufgabe der vorliegenden Erfindung darin, polymermodifiziertes Bitumen herzustellen, das gegenüber dem Stand der Technik eine verbesserte elastische Rückstellung und eine niedrige Empfindlichkeit auf verformende Kräfte bei niedrigem Schwefelgehalt aufweist.

Überraschenderweise kann die Aufgabe dadurch gelöst werden, dass die Copolymere vom Typ Styrol-Butadien (SBR) oder Styrol-Butadien-Styrol (SBS) im Bitumen mit C₇-C₈-Dialkylpolysulfiden vulkanisiert werden. Das erfindungsgemäße polymermodifizierte Bitumen weist verbesserte elastische Rückstellung und die niedrigste Empfindlichkeit auf verformende Kräfte auf.

### Gegenstand der Erfindung

Gegenstand der vorliegenden Erfindung ist polymermodifiziertes Bitumen erhältlich dadurch, dass Styrol-Butadien-Copolymere, gegebenenfalls gelöst in Öl, bei Temperaturen von mindestens 150°C dem Bitumen zugemischt und anschließend die Dialkylpolysulfide der Formel (I)

R¹-S₍ₓ₎-R² (I),

wobei R¹ und R² gleich oder verschieden sind und für einen linearen oder verzweigten C₇-C₈-Alkylrest stehen und x für die Zahlen 3 bis 8 steht,
zugemischt werden.

### Bevorzugte Ausführungsformen der Erfindung

Bei den Styrol-Butadien-Copolymeren (SBR) handelt es sich um einen Kautschuk aus 1,3-Butadien und Styrol.

Die Styrol-Butadien-Copolymere setzen sich besonders bevorzugt zusammen aus 40-99 Gew. % 1,3-Butadien und 1 - 60 Gew.% Styrol.

Als SBR- Copolymere sind Styrol-Butadien-Styrol(SBS)- Block-Copolymere bevorzugt.

Bei den Styrol-Butadien-Copolymeren können handelsübliche Produkte eingesetzt werden; sie können aber auch durch Emulsionspolymerisation hergestellt werden, siehe hierzu z.B. I. Franta, Elastomers and Rubber Compounding Materials, Elesevier, Amsterdam 1989, Seite 88 bis 92.

Die erfindungsgemäß eingesetzten Dialkylpolysulfide der Formel (I) dienen als Schwefelquelle für die Vulkanisation von Styrol-Butadien-Copolymeren oder Styrol-Butadien-Styrol(SBS)- Block Copolymeren.

Bei den eingesetzten Dialkylpolysulfiden der Formel (I) handelt es sich vorzugsweise um Dialkylpolysulfide, in denen R¹ und R² gleich oder verschieden sind und für einen linearen oder verzweigten C₈-Alkylrest stehen und x für die Zahlen 3 bis 8 steht.

Die Dialkylpolysulfide können sowohl einzeln als auch als Gemisch in beliebiger Abmischung untereinander in dem erfindungsgemäßen Verfahren eingesetzt werden.

In einer weiteren Ausführungsform der Erfindung sind als Dialkylpolysulfid der Formel (I) Dioctylpentasulfid und/oder Dioctyltetrasulfid bevorzugt.

Bei den vorgenannten C₇-C₈-Dialkylpolysulfiden handelt es sich ebenfalls um kommerziell verfügbare Produkte.

Die Menge an C₇-C₈-Dialkylpolysulfid beträgt vorzugsweise 0,1 bis 1 Gew.%, besonders bevorzugt 0,2 bis 0,8 Gew.%, bezogen auf die Masse der Copolymer-Bitumen-Mischung.

Bitumen bezeichnet ein sowohl natürlich vorkommendes als auch durch Destillation aus Erdöl gewonnenes Gemisch aus verschiedenen organischen Stoffen. Aufgrund der biologischen Herkunft besteht Bitumen hauptsächlich aus Kohlenstoff und Wasserstoff. Es ist ein schwer flüchtiges, dunkelfarbiges Vielstoffgemisch organischer Substanzen, dessen elastoviskoses Verhalten sich mit der Temperatur ändert Als Bitumen im Sinne der Erfindung sind alle handelsüblichen Bitumenarten, wie z.B. 50/70 oder 70/100 einsetzbar. Dies umfasst vorzugsweise Straßenbaubitumen nach DIN EN 12591.

In einer besonderen Ausführungsform des erfindungsgemäßen Verfahrens werden die Styrol-Butadien-Copolymeren in mindestens einem mineralischem Öl gelöst eingesetzt, bevor diese mit dem Bitumen vermischt werden.

Als Öle im Sinne der Erfindung können dabei eingesetzt werden naphtenische Öle, wie beispielsweise das naphtenische "Nynas T 22" oder paraffinbasische Raffinate, die auch unter dem Begriff RAE (Residual Aromatic Extract) gemäß EU Substanz Richtlinie bekannt sind, wie etwa das Prozess- und Weichmacheröl "Shell Flevex 595".

Vorzugsweise werden nach dem Einmischen der Styrol-Butadien-Copolymere in das Bitumen die Dialkylpolysulfide der Formel (I) zudosiert. Die Zudosierung erfolgt vorzugsweise unter mechanischer Beanspruchung, mittels Mischaggregaten, wie vorzugsweise Innenmischer, Hochdruck-Homogenisatoren, wie insbesondere Hochschermischgeräte, wie z.B. Ultra-Turrax^{®}, erfolgen kann. Im großtechnischen Bereich ist die Verwendung von Innenmischern dabei besonders bevorzugt, wobei die Art des Innenmischers keiner besonderen Beschränkung unterliegt. Im Labormaßstab ist das Hochschermischgerät, z.B. ein Ultra-Turrax^{®}, besonders bevorzugt oder auch ein Ankerrührer mit mindestens 2 Flügeln.

Im Fall des Einsatzes eines Innenmischers zur mechanischen Beanspruchung sind Innenmischer mit ineinandergreifenden oder mit tangierenden Rotoren bevorzugt. Dabei ist ein Innenmischer mit ineinander greifenden Rotoren besonders bevorzugt, da auf diese Weise mehr Scherenergie eingebracht werden kann.

Die Rührgeschwindigkeit kann in Abhängigkeit von der Viskosität des polymermodifizierten Bitumens (PmB) eingestellt werden, bei einem Ankerrührer mit mindestens 2 Flügeln liegt die Rührgeschwindigkeit vorzugsweise bei 150 rpm bis 500 rpm, besonders bevorzugt 180-250 rpm.

Die Temperatur beim Vermischen beträgt vorzugsweise 150 bis 250°C, besonders bevorzugt 160 bis 180°C.

Die Mischzeit unter mechanische Beanspruchung beträgt für das Vermischen der Styrol-Butadien-Copolymere mit dem Bitumen vorzugsweise 60 bis 480 Minuten, besonders bevorzugt 60 bis 240 Minuten und für das Vermischen des Dialkypolysulfids der Formel (I) in die Styrol-Butadien-Copolymer-Bitumen-Mischung vorzugsweise 1 bis 60 Minuten, besonders bevorzugt 5 bis 10 Minuten.

Nach dem Vermischen des Dialkypolysulfids der Formel (I) kann das Ende der Vulkanisation daran vorzugsweise erkannt werden, dass kein weiterer Viskositätsanstieg erfolgt.

Im Falle des Einsatzes der Styrol-Butadien-Copolymere in Öl ist es bevorzugt, wenn das Gewichts-Verhältnis von Öl zu Styrol-Butadien-Copolymer 9:1 bis 1:1, vorzugsweise 7:1 bis 3:1 beträgt.

Gegenstand der Erfindung ist ebenfalls das Verfahren zur Herstellung des erfindungsgemäßen polymermodifizierten Bitumens, wonach Styrol-Butadien-Copolymere, gegebenenfalls gelöst in Öl, bei Temperaturen von mindestens 150°C dem Bitumen zugemischt und anschließend die Dialkylpolysulfide der Formel (I) R¹-S₍ₓ₎-R² (I), wobei R¹ und R² gleich oder verschieden sind und für einen linearen oder verzweigten C₇-C₈-Alkylrest stehen und x für die Zahlen 3 bis 8 steht, zugemischt werden.

In Bezug auf das Verfahren zur Herstellung von polymermodifiziertem Bitumen wird in Bezug auf die Definitionen für x, R¹ und R², das Gestein, die Einsatzstoffe und Verfahrensparameter, wie Temperatur und die verwendeten Mischaggregate, sowie die bevorzugten Ausführungsformen auf die obigen Ausführungen zu dem erfindungsgemäßen polymermodifizierten Bitumen verwiesen.

### Weitere bevorzugte Ausführungsform

In einer Ausführungsform enthält das polymermodifizierte Bitumen weitere Additive, wie Metallverbindungen/-salze, insbesondere organische Zinkverbindungen/-salze u.a. als Sulfidfänger und damit als Geruchsverminderer.

Die Menge an Additiven beträgt vorzugsweise 0,1 bis 1 Gew. %.

In einer weiteren bevorzugten Ausführungsform wird das polymermodifizierte Bitumen anschließend mit Gestein versetzt.

Bei Gestein im Sinne der Erfindung handelt es sich vorzugsweise um natürliche Gesteinskörnungen, vorzugsweise gemäß DIN EN 13043, die vorzugsweise einer mechanischen Aufbereitung, wie beispielsweise Brechen und Absieben, unterzogen worden sind.

Gesteinskörnungen, die für Asphaltmischgut für den Bau von Verkehrsflächen eingesetzt werden, müssen den Anforderungen der DIN EN 13043 bzw. der TL Gestein-StB 04 entsprechen. Asphaltdeckschichtmischgut besteht aus Gesteinskörnungen bis zu einem Größtkorn von 16 mm.

Die Anforderungen an Gesteinskörnungen werden unter anderem in der DIN 18196 Bodenklassifikation für bautechnische Zwecke und den Technischen Lieferbedingungen für Gesteinskörnung im Straßenbau, TL Gestein-StB, Ausgabe 2004 (S. 11) definiert.

Das Gestein liegt dabei vorzugsweise entweder in ungebrochener Form (als Rundkorn), insbesondere als Kies, Sand, Schotter und Splitt; oder in gebrochener Form vor.

Die Menge an Gestein beträgt vorzugsweise bis zu 95 Gew.%, vorzugsweise 90 bis 95 Gew%, bezogen auf die Gesamtmenge an polymermodifiziertem Bitumen.

Das Gestein wird vorzugsweise unter mechanischer Beanspruchung, vorzugsweise mittels Rühraggreganten mit dem polymermodifizierten Bitumen vermischt.

In den Fällen in denen das polymermodifizierte Bitumen auch noch Gestein beinhaltet, spricht man von Asphalt.

### Weiterer Gegenstand der Erfindung

Ein weiterer Gegenstand der vorliegenden Erfindung ist somit Asphalt, enthaltend das erfindungemäß polymermodifizierte Bitumen.

In Bezug auf das Verfahren zur Herstellung von polymermodifiziertem Bitumen wird in Bezug auf die Definitionen für x, R¹ und R², das Gestein, die Einsatzstoffe und Verfahrensparameter, wie Temperatur und die verwendeten Mischaggregate, sowie die bevorzugten Ausführungsformen auf die obigen Ausführungen zu dem erfindungsgemäßen polymermodifizierten Bitumen verwiesen.

Bei Asphalt im Sinne der Erfindung handelt es sich um eine natürliche oder technisch hergestellte Mischung enthaltend polymermodifiziertes Bitumen und Gestein (Gesteinskörnungen). Diese wird vorzugsweise im Straßenbau für Fahrbahnbefestigungen, im Hochbau für Bodenbeläge, im Wasserbau und im Deponiebau zur Abdichtung verwendet. Das Mischungsverhältnis liegt vorzugsweise bei 90-95 Gew.-% Gestein/ Gesteinskörnung und ca. 5-10 Gew.-% Bitumen. Dieses Verhältnis kann jedoch nach oben oder unten verändert werden. Die beigegebene Menge (sogenannter Bindemittelgehalt) und die Härte (also die Bindemittelsorte) des Bitumens verändern das Materialverhalten wesentlich.

Die Funktion des Bitumens, das vorzugsweise 4-7% des Straßenbelags ausmacht, ist die eines Bindemittels für das Gesteinsgerüst.

Ein weiterer Gegenstand der vorliegenden Erfindung ist die Verwendung des erfindungsgemäßen polymermodifizierten Bitumen im Hochbau zur Abdichtung von Gebäudeteilen gegen Wasser, wie beispielsweise Bitumendachbahnen zur Dachabdichtung, Schutz von Stahl gegen Korrosion und im Straßenbau als Bindemittel für die Gesteinskörnungen im Asphalt, vorzugsweise als Straßenbelag.

Die vorliegende Erfindung wird anhand der nachfolgenden Beispiele näher erläutert, wobei die vorliegende Erfindung keinesfalls auf die Beispiele beschränkt ist.

### Ausführungsbeispiele:

Eingesetzt wurden:
- SBS, Kraton^{®} D1101, ein lineares unhydriertes SBS/SB-Block-Copolymer der Firma Kraton Polymers LLC, mit SBS= Styrol-Butadien-Styrol Block Copolymer, SB= Styrol-Butadien-Diblock mit einem Polystyrol-Anteil: von 29-33%.
- Kraton^{®} D 1102, ein lineares unhydriertes SBS/SB-Block-Copolymer der Firma Kraton Polymers LLC, mit SBS= Styrol-Butadien-Styrol Block Copolymer, SB= Styrol-Butadien-Diblock mit einem Polystyrol-Anteil: von 26,8-30%.
- Nynas T 400 : naphtenisches Öl der Firma Nynas AB.
- Di-tert-dodecyl-Pentasulfid der Firma Arkema mit der Produktbezeichnung TPS^{®} 32.
- Di-octyl-Pentasulfid 40% Schwefel eingesetzt als Additin^{®} RC 2540 der Firma Lanxess Deutschland GmbH.

### Beispiel 1V (Vergleichsbeispiel):

Es wurden analog zu US-A 4554313 12 g des SBS-Copolymers (SBS, Kraton^{®} 1101) mit 32 g Öl Nynas T 400 bei 170°C vermischt. Anschließend wurde diese Lösung zu 366g Bitumen (Bitumen 50/70) zugegeben, so dass sich eine Lösung von 3 Gew.% Polymer in einer Bitumen-Ölmischung ergab. Im Anschluss daran wurden, wie in Tabelle 1 ausgewiesen, 0,32 Gew% Di-tert-dodecyl-Pentasulfid mit 32% Schwefel (S-Anteil 0,1 Gew.%) zugegeben und durch Erhitzen auf 170°C für 2 Stunden vulkanisiert.

Danach wurde mit der so erhaltenen Masse ein DSR-Probekörper gegossen und bei 60°C der MSCR Test bei 3 Laststufen durchgeführt. Die Ergebnisse sind in Tabelle 1 aufgeführt.

### Beispiel 1E (erfindungsgemäß):

Es wurde zunächst eine Lösung aus 12 g des Polymers (SBS, Kraton^{®} 1101) in 32 g des Öls Nynas T 400 bei 170°C hergestellt. Diese Lösung wurde zu 366 g Bitumen zugegeben, so dass sich eine Lösung von 3 Gew% Polymer in einer Bitumen-Ölmischung ergab. Im Anschluss daran wurden, wie in Tabelle 1 ausgewiesen, 0,25 Gew% Di-octyl-Pentasulfid mit 40% Schwefel (S-Anteil = 0,1 Gew.%) zugegeben und die Vernetzung durch Erhitzen auf 170°C für 2 Stunden durchgeführt

Zur Bestimmung der viskoelastischen Eigenschaften, wie etwa der elastischen Rückstellung von modifizierten Bitumina, hat sich das Dynamische Scher-Rheometer ("DSR") bewährt. Zur Bestimmung der elastischen Eigenschaften wurde gemäß DIN EN 16659 (2013) ein "Multiple Stress Creep and Recoverey Test (MSCR-Prüfung)" durchgeführt. Dieses MSCR-Verfahren ("multiple stress creep recovery") stellt ein einfaches Verfahren da, welches bei erhöhter Temperatur wie etwa 60°C mit dem DSR eine schnelle Bestimmung des rückformbaren Anteils einer erfolgten Deformation in Prozent ("R-Wert") ermöglicht. Der J Wert gibt das Verhältnis von bleibender Verformung zu eingesetzter Kraft an, und ist daher ein Maß für die Empfindlichkeit des Bindemittels auf verformende Kräfte.

Aus den in den Beispielen 1V und 1E erhaltenen Massen wurde ein DSR-Probekörper gegossen und bei 60°C der MSCR Test bei 3 Laststufen durchgeführt. Bei diesem Test, der die Belastungsverhältnisse auf der Strasse besser wiederspiegelt als oszillierende DSR-Messungen, wurden in 10 Belastungszyklen mit einer Belastungsphase mit konstanter Scherbeanspruchung von 1 Sekunde und eine darauf folgende Entlastungsphase von 9 Sekunden Dauer die Rückverformung in % (R Wert) bestimmt. Dieser Test wurde mit drei Laststufen von 0,1 kPa, 1,6 kPa und 3,2 kPa durchgeführt. Die Deformationen während der kraftgeregelten Zyklen wurden in drei Deformationsgrößen unterteilt erfasst:
Die Ergebnisse sind in Tabelle 1 aufgeführt.

**Tabelle 1. DSR MSCR Testergebnisse**

| Vernetzer | Beispiel 1E (erfindungsgemäß) 0,1 Gew% S in Form von Dioctyl(C8)pentasulfid | Beispiel 1V 0,1 Gew% S in Form von Di-tert-dodecyl(C12) pentasulfid |
|---|---|---|
| R % 0.1 kPa | 33,84 | 26,63 |
| R % 1,6 kPa | 10,32 | 6,14 |
| R % 3,2 kPa | 2,68 | 0,34 |
| J 1/kPa 0,1 kPa | 1,9040 | 2,2371 |
| J 1/kPa 1,6 kPa | 2,9857 | 3,3451 |
| J 1/kPa 3,2 kPa | 3,7305 | 4,1041 |

Bei jeder Laststufe war der R Wert für die elastische Rückformung für das **Dioctyl** pentasulfid am höchsten und der J-Wert für die Empfindlichkeit auf Verformung am geringsten, trotz Dosierung des gleichen Schwefelgehaltes.

### Beispiel 2 (erfindungsgemäß) ohne Öl:

Es wurden zunächst 12 g des besser löslichen Polymers SBS, Kraton^{®} 1102 zu 366 g Bitumen bei 180°C zugegeben, so dass sich eine Lösung von 3 Gew% Polymer in Bitumen ergab. Anschließend wurden gemäß der Tabelle 1 0,25 Gew% Di-octyl-Pentasulfid mit 40% Schwefel (S-Anteil= 0,1 Gew.%) zugegeben und die Vernetzung durch Erhitzen auf 170°C für 2 Stunden durchgeführt

**Tabelle 2. DSR MSCR Test Ergebnisse**

| | **Kraton^{®} 1102, nicht vernetzt** | **Kraton^{®} 1102 vernetzt mit** 0,1 Gew% S in Form von Dioctyl(C8)pentasulfid | **Kraton^{®} 1102 vernetzt mit** 0,1 Gew% S in Form von Di-tert-dodecyl(C12)-pentasulfid |
|---|---|---|---|
| **R % 0.1 kPa** | 5,73 | 14,92 | 14,35 |
| **R % 1,6 kPa** | 3,26 | 10,7 | 9,91 |
| **R % 3,2 kPa** | 1,38 | 6,14 | 5,32 |

Auch bei diesem Versuch zeigte das C₈-Dialkylpolysulfid die beste elastische Rückformung, wie Tabelle 2 zeigt.

## Patentansprüche

1. Polymermodifiziertes Bitumen erhältlich dadurch, dass Styrol-Butadien-Copolymere, gegebenenfalls gelöst in Öl, bei Temperaturen von mindestens 150°C, vorzugsweise 160 -250°C, dem Bitumen zugemischt und anschließend die Dialkylpolysulfide der Formel (I)
R¹-S₍ₓ₎-R² (I),
in denen R¹ und R² gleich oder verschieden sind und für einen linearen oder verzweigten C₇-C₈-Alkylrest stehen und x für die Zahlen 3 bis 8 steht,
zugemischt werden.

2. Polymermodifiziertes Bitumen nach Anspruch 1, **dadurch gekennzeichnet, dass** R¹ und R² in den Dialkylpolysulfiden der Formel (I) für einen linearen oder verzweigten C₈-Alkylrest stehen und x für die Zahlen von 3 bis 8 steht.

3. Polymermodifiziertes Bitumen nach Anspruch 1 oder 2, **dadurch gekennzeichnet, dass** die Styrol-Butadien-Copolymere sich zusammensetzen aus 40-99 Gew.% 1,3-Butadien und 1 - 60 Gew.% Styrol.

4. Polymermodifiziertes Bitumen nach einem der Ansprüche 1 bis 3, **dadurch gekennzeichnet, dass** es sich bei den Styrol-Butadien-Copolymeren um Styrol-Butadien-Styrol(SBS)-Block-Copolymere handelt.

5. Polymermodifiziertes Bitumen nach einem der Ansprüche 1 bis 4, **dadurch gekennzeichnet, dass** das Dialkylpolysulfid der Formel (I) in einer Menge von 0,1 bis 1 Gew.%, besonders bevorzugt 0,2 bis 0,8 Gew.%, bezogen auf die Menge an Styrol-Butadien-Copolymeren, eingesetzt wird.

6. Polymermodifiziertes Bitumen nach einem der Ansprüche 1 bis 5, **dadurch gekennzeichnet, dass** die Styrol-Butadien-Copolymere in mindestens einem mineralischem Öl gelöst werden, bevor diese mit dem Bitumen vermischt werden.

7. Polymermodifiziertes Bitumen nach einem der Ansprüche 1 bis 6, **dadurch gekennzeichnet, dass** als Öl naphtenische Öle eingesetzt werden.

8. Polymermodifiziertes Bitumen nach einem der Ansprüche 1 bis 7, **dadurch gekennzeichnet, dass** das Gewichts-Verhältnis von Öl zu Styrol-Butadien-Copolymer 9:1 bis 1:1, vorzugsweise 7:1 bis 3:1 beträgt.

9. Verfahren zur Herstellung von polymermodifizierten Bitumen nach einem der Ansprüche 1 bis 8, **dadurch gekennzeichnet, dass** das Styrol-Butadien-Copolymer, gegebenenfalls gelöst in Öl, bei Temperaturen von mindestens 150°C vorgelegt werden, dem Bitumen zugemischt und anschließend die Dialkylpolysulfide der Formel (I)
R¹-S₍ₓ₎-R² (I),
wobei R¹ und R² gleich oder verschieden sind und für einen linearen oder verzweigten C₇-C₈-Alkylrest stehen und x für die Zahlen 3 bis 8 steht,
zugemischt werden.

10. Verfahren nach Anspruch 9, **dadurch gekennzeichnet, dass** Gestein eingemischt wird.

11. Verwendung des polymermodifizierten Bitumens nach einem der Ansprüche 1 bis 8 zur Herstellung von Asphalt.

12. Verwendung des polymermodifizierten Bitumens nach einem der Ansprüche 1 bis 8, im Hochbau zur Abdichtung von Gebäudeteilen gegen Wasser und zum Schutz von Stahl gegen Korrosion.

## Claims

1. Polymer-modified bitumen obtainable when styrene-butadiene copolymers, optionally dissolved in oil, are admixed with the bitumen at temperatures of at least 150°C, preferably 160°C to 250°C, and subsequently the dialkyl polysulfides of formula (I)
R¹S₍ₓ₎-R² (1),
in which R¹ and R² are identical or different and represent a linear or branched C₇-C₈-alkyl radical and x represents numbers from 3 to 8,
are admixed.

2. Polymer-modified bitumen according to Claim 1, **characterized in that** R¹ and R² in the dialkyl polysulfides of formula (1) represent a linear or branched C₈-alkyl radical and x represents numbers from 3 to 8.

3. Polymer-modified bitumen according to Claim 1 or 2, **characterized in that** the styrene-butadiene copolymers are composed of 40-99% by weight of 1,3-butadiene and 1-60% by weight of styrene.

4. Polymer-modified bitumen according to any of Claims 1 to 3, **characterized in that** the styrene-butene copolymers are styrene-butadiene-styrene (SBS) block copolymers.

5. Polymer-modified bitumen according to any of Claims 1 to 4, **characterized in that** the dialkyl polysulfide of formula (I) is employed in an amount of 0.1% to 1% by weight, particularly preferably 0.2% to 0.8% by weight, based on the amount of styrene-butadiene copolymers.

6. Polymer-modified bitumen according to any of Claims 1 to 5, **characterized in that** the styrene-butadiene copolymers are dissolved in at least one mineral oil before they are mixed with the bitumen.

7. Polymer-modified bitumen according to any of Claims 1 to 6, **characterized in that** the oils employed are naphthenic oils.

8. Polymer-modified bitumen according to any of Claims 1 to 7, **characterized in that** the weight ratio of oil to styrene-butadiene copolymer is 9:1 to 1:1, preferably 7:1 to 3:1.

9. Process for producing polymer-modified bitumens according to any of Claims 1 to 8, **characterized in that** the styrene-butadiene copolymer, optionally dissolved in oil, are initially charged at temperatures of at least 150°C, admixed with the bitumen and subsequently the dialkyl polysulfides of formula (I)
R¹S₍ₓ₎-R² (1),
wherein R¹ and R² are identical or different and represent a linear or branched C₇-C₈-alkyl radical and x represents numbers from 3 to 8,
are admixed.

10. Process according to Claim 9, **characterized in that** aggregate is incorporated.

11. Use of the polymer-modified bitumen according to any of Claims 1 to 8 for producing asphalt.

12. Use of the polymer-modified bitumen according to any of Claims 1 to 8 in high-rise construction for sealing building parts against water and for protection of steel against corrosion.

## Revendications

1. Bitume modifié par polymère, pouvant être obtenu en ce que des copolymères de styrène-butadiène, le cas échéant dissous dans de l'huile, sont mélangés au bitume à des températures d'au moins 150°C, de préférence de 160-250°C, et ensuite les polysulfures de dialkyle de formule (I)
R¹-S₍ₓ₎-R² (1)
dans laquelle R¹ et R² sont identiques ou différents et représentent un radical C₇-C₈-alkyle linéaire ou ramifié et x représente les nombres 3 à 8, y sont mélangés.

2. Bitume modifié par polymère selon la revendication 1, **caractérisé en ce que** R¹ et R² dans les polysulfures de dialkyle de formule (I) représentent un radical C₈-alkyle linéaire ou ramifié et x représente les nombres de 3 à 8.

3. Bitume modifié par polymère selon la revendication 1 ou 2, **caractérisé en ce que** les copolymères de styrène-butadiène sont composés de 40-99% en poids de 1,3-butadiène et de 1-60% en poids de styrène.

4. Bitume modifié par polymère selon l'une des revendications 1 à 3, **caractérisé en ce que** les copolymères de styrène-butadiène sont des copolymères séquencés de styrène-butadiène-styrène (SBS).

5. Bitume modifié par polymère selon l'une des revendications 1 à 4, **caractérisé en ce que** le polysulfure de dialkyle de formule (I) est utilisé en une quantité de 0,1 à 1% en poids, de manière particulièrement préférée de 0,2 à 0,8% en poids, par rapport à la quantité de copolymères de styrène-butadiène.

6. Bitume modifié par polymère selon l'une des revendications 1 à 5, **caractérisé en ce que** les copolymères de styrène-butadiène sont dissous dans au moins une huile minérale avant qu'ils ne soient mélangés avec le bitume.

7. Bitume modifié par polymère selon l'une des revendications 1 à 6, **caractérisé en ce que** des huiles naphténiques sont utilisées en tant qu'huile.

8. Bitume modifié par polymère selon l'une des revendications 1 à 7, **caractérisé en ce que** le rapport pondéral d'huile à copolymère de styrène-butadiène est de 9:1 à 1:1, de préférence de 7:1 à 3:1.

9. Procédé pour la préparation de bitume modifié par polymère selon l'une des revendications 1 à 8, **caractérisé en ce que** les copolymères de styrène-butadiène, le cas échéant dissous dans de l'huile, sont disposés au préalable à des températures d'au moins 150°C, mélangés au bitume et ensuite les polysulfures de dialkyle de formule (I)
R¹-S₍ₓ₎-R² (1),
dans laquelle R¹ et R² sont identiques ou différents et représentent un radical C₇-C₈-alkyle linéaire ou ramifié et x représente les nombres 3 à 8, y sont mélangés.

10. Procédé selon la revendication 9, **caractérisé en ce qu'**un matériau pierreux est introduit en mélangeant.

11. Utilisation du bitume modifié par polymère selon l'une des revendications 1 à 8 pour la préparation d'asphalte.

12. Utilisation du bitume modifié par polymère selon l'une des revendications 1 à 8, dans la construction pour l'étanchéification de parties de bâtiments contre l'eau et pour la protection de l'acier contre la corrosion.
